Europäisches Patentamt

European Patent Office

Office européen des brevets

(11) Publication number: **0 112 547**
**B1**

(12) **EUROPEAN PATENT SPECIFICATION**

(45) Date of publication of patent specification: **14.03.90**

(51) Int. Cl.⁵: **G 11 B 15/18, G 11 B 15/46**

(21) Application number: **83112831.9**

(22) Date of filing: **20.12.83**

(54) Method of reproducing an information at variable speed from a magnetic tape and apparatus thereof.

(30) Priority: **24.12.82 JP 226045/82**

(43) Date of publication of application:
**04.07.84 Bulletin 84/27**

(45) Publication of the grant of the patent:
**14.03.90 Bulletin 90/11**

(84) Designated Contracting States:
**DE FR GB IT**

(56) References cited:
**EP-A-0 096 406**
**EP-A-0 100 546**
**EP-A-0 102 600**
**DE-A-3 139 810**
**US-A-4 255 768**
**US-A-4 306 255**
**US-A-4 322 755**

**GRUNDIG TECHNISCHE INFORMATIONEN, Vol. 28, no. 3, 1981, pages 105-116,158, Regensburg, DE; W. KORNHAAS: "Videorecorder video 2 x 4 super"**

(73) Proprietor: **HITACHI, LTD.**
**6, Kanda Surugadai 4-chome Chiyoda-ku Tokyo (JP)**

(72) Inventor: **Azuma, Nobuo**
**542, Yorii-Apartment 391-2, Tabiko Katsuta-shi Ibaraki-ken (JP)**
Inventor: **Satoh, Kenji**
**627-1-154, Noba-cho Konan-ku Yokohama-shi Kanagawa-ken (JP)**
Inventor: **Mohri, Katsuo**
**2-7-1, Uragaoka Yokosuka-shi Kanagawa-ken (JP)**
Inventor: **Masuda, Yoshinori**
**1434-2, Tabiko Katsuta-shi Ibaraki-ken (JP)**

(74) Representative: **Altenburg, Udo, Dipl.-Phys. et al**
**Patent- und Rechtsanwälte Bardehle-Pagenberg-Dost-Altenburg & Partner Postfach 86 06 20**
**D-8000 München 86 (DE)**

# EP  0 112 547  B1

(56) References cited:

PATENTS ABSTRACTS OF JAPAN, vol. 5, no.
185 (P-91)857r, 25th November 1981; & JP - A -
56 114 148

GRUNDIG TECHNISCHE INFORMATIONEN,
VOL. 27, NO. 3, 1980, PAGES 111-120, FURTH,
DE; W. KORNHAAS: "DAS BAND-, KOPFSERVO-
UND SPURNACHFüHRUNGSSYSTEM (DTF)
DES VIDEO 2 X 4"

PATENTS ABSTRACTS OF JAPAN, VOL. 5, NO.
86, 5TH JUNE 1981, PAGE 758 E-60; & JP - A - 56
32 885

PATENTS ABSTRACTS OF JAPAN, vol. 8, no.
163 (P-290)1600r, 27th July 1984; & JP - A - 59 58
650

## Description

### Background of the invention

This invention relates to a method for reproducing an information from a magnetic tape, especially a method for a variable speed reproduction by intermittently driving the magnetic tape and an apparatus for carrying out the method.

In a rotating head helical scan type video tape recorder (abreviated VTR) of the prior art, a synchronizing signal is usually recorded on the magnetic tape during a recording mode, and the recorded synchronizing signal is reproduced during a reproducing mode for controlling rotating phase of a capstan or a rotating cylinder by a servo circuit so that the rotating heads correctly trace video tracks on which a video signal is recorded.

As the synchronizing signal, in general, control pulses (abbreviated CTL pulses), which are a series of pulses having a half frequencies of a vertical synchronizing signal, are continuously recorded on one edge of the magnetic tape.

In the system using the CTL pulses, even if the magnetic tape is drived at any speeds like an intermittent drive for a noiseless slow motion picture, position of the rotating heads to the video tracks is absolutely determined at the time of detecting the CTL pulses.

Therefore, in the system using the CTL pulses, it is easy to reproduce the video signal by using the intermittent drive for the noiseless slow motion picture, in which the magnetic tape stopped at one of noiseless still states is normally moved to the next noiseless still state, which is one frame period apart from the former one.

By repeating the intermittent drive having a proper time-interval, the video signal is reproduced at the noiseless slow motion.

That is, in the system using the CTL pulses, the variable speed reproduction by the intermittent drive is simply realized by executing a stop control which contains a reverse braking of a capstan motor after some time delay from the detection of one of the CTL pulses.

However, the above mentioned can not be used in other servo systems, for example, a system recording pilot signals on the video tracks as a synchronizing signal disclosed by U.S. Patent No. 4,056,832 and No. 4,297,733, etc.

The above patents only describe that a system using the pilot signals having three or four frequencies as a tracking signal for accurately reproducing the video signal at a normal tape speed. Grundig Technische Informationen 3—81 discloses a method and apparatus according to the first part of claims 1 and 4. A tracking error signal is supplied to a circuit for controlling tape feeding.

### Summary of the invention

Accordingly, it is an object of the present invention to provide a method and an apparatus for reproducing information from a magnetic tape at any tape speeds in a system using pilot signals as a tracking signal.

A noiseless slow motion picture from a video tape should be provided by using an intermittent drive in a helical scan type VTR. The invention is set out in claims 1 and 4.

Further, in this invention, in order to increase accuracy of the tracking error signal, the tracking error signal is averaged by integrating itself during at least one field period within the tape stop state of the intermittent drive.

### Brief description of the drawings

Fig. 1 shows a block diagram of an apparatus for reproducing a video signal at variable speed as an embodiment of the present invention,

Fig. 2 shows a schematic diagram of video tracks for explaining the embodiment shown in Fig. 1,

Fig. 3 shows a schematic diagram of wave forms of output signals of main parts shown in Fig. 1,

Fig. 4 shows a schematic diagram of a characteristic wave form of a sampled tracking error signal in response to deviation ($\Delta X$),

Figs. 5(I), 5(II) and 5(III) show a schematic diagram explaining a relation between a trail of a head, a tracking error signal and control signals (CMRUN and REVERSE),

Fig. 6 shows a flow chart for explaining a program executed in the micro computer 20 shown in Fig. 1,

Fig. 7 shows a schematic diagram of a characteristic wave form of an optimum unit value ($\Delta FG$) in response to the tracking error signal, and

Fig. 8 shows a flow chart for explaining another program executed in the micro computer 20 shown in Fig. 1.

### Detail Description of the referred embodiment

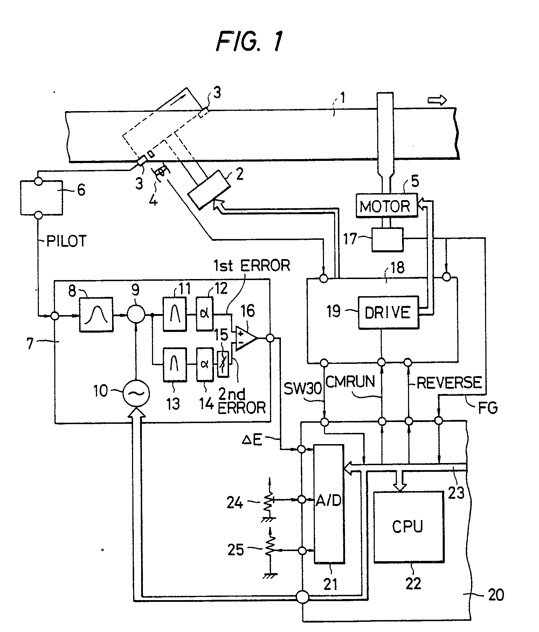

Some embodiments are explained by using Figures 1—8 hereinafter. Referring to Fig. 1, the numerals 1, 2, 3 and 4 denote a video tape, on tracks of which a video signal and pilot signals are recorded, a cylinder motor for rotating magnetic heads, a tach head and a capstan motor for rotating a capstan, respectively.

As is well known, the tach head 4 generates a series of tach pulses by detecting a rotating phase of the cylinder. The tach pulses are used for producing a heads exchanging signal (SW30). The numeral 7 designates a circuit for generating a tracking error signal from the pilot signals. In the tracking error signal generating circuit 7, a band pass filter (abbreviated BPF) 8 selectively passes the pilot signals having four frequencies, which are mentioned after in detail.

The passed pilot signals are mixed with one of output signals of a local frequency generator 10 at a mixer 9. The output signals thereof have the same frequencies as the pilot signals. The mixer 9 produces output signals having additive and subtractive frequencies between the frequencies of the passed pilot signals and the frequency of the output signal of the local frequency generator 10. BPFs 11 and 13 selectively pass a signal having a particular subtractive frequency, respectively. Detectors 12 and 14 connected to the BPFs 11 and 13 generate a first error signal and a second error signal, respectively. The first error signal is directly transferred to a comparator 16, and the second error signal is transferred to the comparator 16 through a variable resistor 15.

The comparator 16 generates the tracking error signal.

The numeral 17 designates a frequency generator for generating a series of pulses (FG) in response to the rotation of the capstan motor 5. The numeral 18 denotes a servo circuit containing a driver 19 for the capstan motor 5. The numeral 20 denotes a controller like a micro computer having an analog digital converter 21, a central processing unit (abbreviated CPU) 22 and a bus line 23, etc. The numerals 24 and 25 denote variable resistors for controlling a motion of magnetic tape 1 in the intermittent drive, which are explained after.

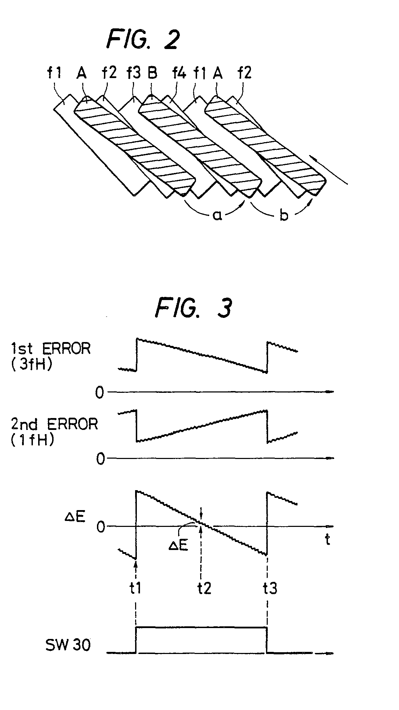

In this embodiment, the pilot signals having four frequencies f1 (6.5 fH), f2 (7.5 fH), f3 (10.5 fH) and f4 (9.5 fH) are used as shown in Fig. 2. Here, fH means a horizontal synchronizing frequency. Referring to Fig. 2, the pilot signals f1, f2, f3 and f4 are sequentially recorded together with the video signal on the tracks at each field of the video signal. In this case, the output signals of the mixer 9 of Fig. 2 have frequencies fH, 2fH, 3fH and 4fH.

The center frequencies of the BPFs 11 and 13 are selected at frequencies 3fH and fH, respectively.

The above mentioned Patent describes the reason in detail.

Back to Fig. 2, parts with oblique lines (A), (B), (A)...show trails of one of the heads 3 during the tape stop states of the intermittent drive, and arrows (a), (b),... show the tape feedings between the adjacent tape stop states of the intermittent drive.

In this embodiment, the motion of the apparatus is explained in the field still mode, in which each of the parts (A), (B), (A)... is traced at least one field by one of the heads 3 in the tape stop states. However, this invention can be applied to the frame still mode, in which two adjacent tracks are traced by both of the heads in the tape stop states.

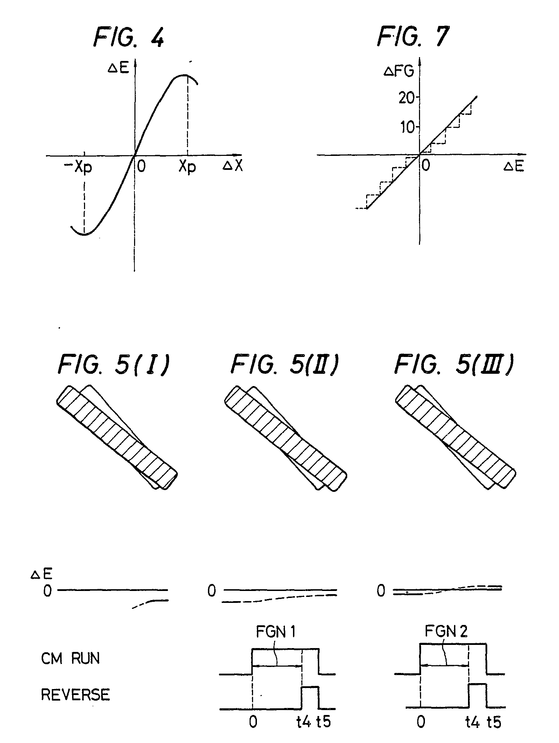

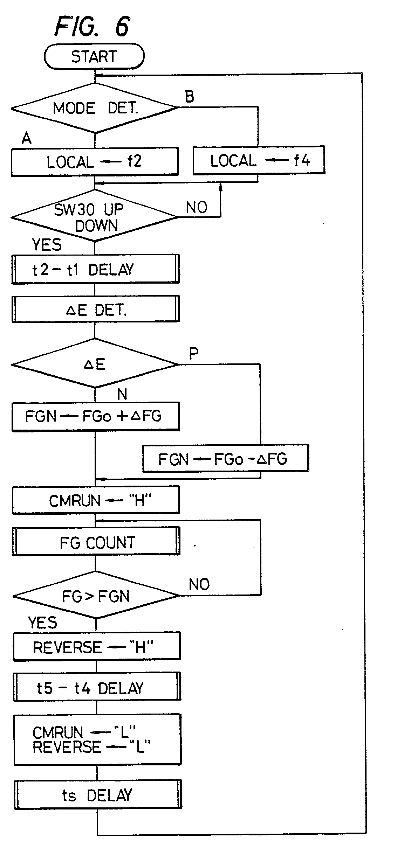

Next, the operation of the embodiment shown in Fig. 1 is explained by using Figs. 4, 5 and 6. At the start in the flow chart shown in fig. 6, the video signal together with the pilot signals is reproduced by one of the rotating heads in the tape stop states. At first, which part is traced by one of the heads 3 should be detected. For this purpose, the local frequency generator 10 generates the output signal having the frequency f2 or f4. If the output signal having the frequency f2 is supplied to the mixer 9 and the amplitude of the tracking error signal is larger than a predetermined level at the leading or trailing edge of the heads exchanging signal (SW30), it is determined that one of the parts (A) is traced by one of the heads 3. Similarly, if the output signal having the frequency f4 is supplied to the mixer 9 and the amplitude of the tracking error signal is larger than a predetermined level at the leading or trailing edge of the heads exchanging signal (SW30), it is determined that one of the parts (B) is traced by one of the heads 3.

For example, as one of the parts (A) is traced by the rotating head and the output signal having the frequency f2 is supplied to the mixer 9, the first error signal, the second error signal and the tracking error signal become to be shown in Fig. 3. The tracking error signal is sampled at a timing (t2) within the tape stop state.

The timing (t2) is determined as below.

$$t2-t1=1/2(t3-t1)$$

The sampled tracking error signal ($\Delta E$) is supplied to the analog to digital converter 21.

The relation between the tracking error signal and the deviation ($\Delta X$) of the tape 1 is shown in Fig. 4. Referring to Fig. 4, a quadrature axis denotes the deviation ($\Delta X$) of the tape 1 from a noiseless still position, and an axis of ordinates designates the sampled tracking error signal ($\Delta E$). A point Xp indicates the deviation corresponding to a track pitch P. Accordingly, the tracking error signal in response to the deviation ($\Delta X$) can be delivered to the micro computer 20.

In this embodiment, the sampled tracking error signal ($\Delta E$) is gotten by sampling the tracking error signal at the timing (t2). But, as a matter of fact, in order to increase the S/N ratio of the sampled tracking error signal ($\Delta E$), it is better to average the tracking error signals at the timing (t2) of each field during the tape stop state. Further, it is desirable to integrate the values of the tracking error signals during at least one field period during the stop state. In the case of the tape stop state in which the parts (B) is traced by one of the heads 3, the operation is the same one as above mentioned except the frequency of the output signal of the mixer 9. In this case, the frequency f4 is used.

Next, according to the polarity of the sampled tracking error signal, an amount of feeding the tape is controlled. Now, "FGo" is a count number (FGN) of the output pulses (FG) of the frequency generator 17 corresponding to a regular amount of feeding the tape during one intermittant drive, that is, during one frame period drive. If the sampled tracking error signal ($\Delta E$) is negative, the count number (FGN) is changed from "FGo" to "FGN1=FGo+$\Delta$FG", in which "$\Delta$FG" is a unit value of the count number (FGN).

That is, referring to Figs. 5 (I) and 5 (II). In order to transfer the tape from the part (A) to the next part (B), the CPU 22 makes a control signal (CMRUN) high level to drive the capstan motor 5 and starts to count the output pulses (FG) of the frequency generator 17. At a timing (t4), in which the count number (FGN) becomes "FGN1", the CPU 22 makes a control signal (REVERSE) high level to brake the capstan motor 5 until a timing (t5) and makes both the control signals (CMRUN and REVERSE) low level to stop the tape feeding. Here, the time period (t5−t4) is determined by detecting a set value of the variable resistor 24 through the analog digital converter 21. Further, if necessary, the micro computer 20 adjusts a start timing (0), in which the control signal (CMRUN) becomes high level.

The speed of the noiseless slow reproduction is determined by a time period (ts) of the stop state, which is at least one field period and depends on a set value of the variable resistor 25. In this embodiment, the CPU 22 controls the tape feeding by setting the count number (FGN) from the start timing (0) to the timing (t4). However, it is possible to set the count number (FGN) from the start timing (0) to the timing (t5) by controlling the timing (t4) and power for braking the capstan motor 5.

In the case of transferring the tape from the port (B) to the part (A) as shown in Figs. 5 (II) and 5 (III), as the sampled tracking error signal ($\Delta E$) is still negative, the count number (FGN) is adjusted to "FGN2 (=FGo+$\Delta$FG), and the tape is transferred.

As the sampled tracking error signal ($\Delta E$) becomes positive as shown in Fig. 5 (III) during the next stop state, the count number (FGN) should be set to "FGo$-\Delta$FG". For example, the micro computer 20 sets that "FGo" equals to 40 and "$\Delta$FG" equals to 2.

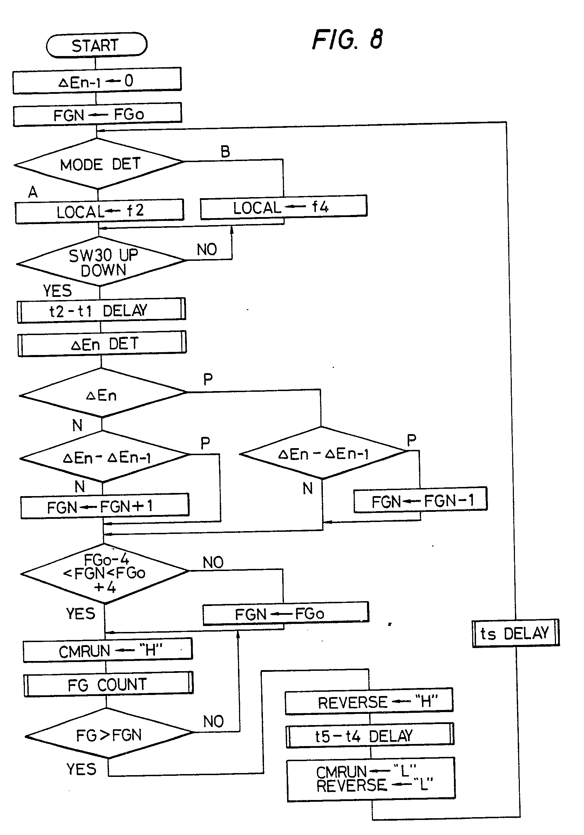

Next, the second embodiment is explained by using Fig. 7. In this embodiment, the unit value ($\Delta$FG) of the count number (FGN) is varied corresponding to the amplitude of the sampled tracking error signal ($\Delta E$). Accordingly, it is possible to shorten the time of leading to the accurate tracking. Referring to Fig. 7, a quadrature axis denotes the sampled tracking error signal ($\Delta E$) and an axis of ordinates designates the optimum unit value ($\Delta$FG).

The optimum unit value ($\Delta$FG) is varied from 20 to 1 in response to the sampled tracking error signal ($\Delta E$) like a dotted line as shown in Fig. 7. By using the optimum unit value ($\Delta$FG), the deviation is compensated at only one intermittent drive.

In the cases above mentioned, the count number (FGN) corresponding to the regular amount of feeding the tape during one intermittent drive is constant that is, "FGo". However, an optimum value of the count number has possibility to be varied from "FGo" by a time aging.

The third embodiment to resolve this problem is explained by using the flow chart shown in Fig. 8. In this embodiment, the optimum value of the count number (FGN) is automatically compensated by controlling the amount thereof corresponding to a difference between the sampled tracking error signal ($\Delta En$) and the former sampled tracking error signal ($\Delta En-1$). Apparently from Fig. 8, if the sampled tracking error signal ($\Delta En$) is negative and the result of subtracting the former sampled tracking error signal ($\Delta En-1$) from the sampled tracking error signal ($\Delta En$) is negative, the count number (FGN) is changed to "FGN+1". Samely, if the sampled tracking error signal ($\Delta En$) is positive and the reuslt of subtracting the former sampled tracking error signal ($\Delta En-1$), from the sampled tracking error signal ($\Delta En$) is positive, the count number (FGN) is changed to "FGN−1".

Further, in this embodiment, if the count number (FGN) does not satisfy the following formula, the count number (FGN) is set back to the optimum value (FGo).

$$FGo-4<FGN<FGo+4$$

This step is useful to turn the count number (FGN) back to the initial value, when the count number (FGN) is apart (more than $\pm4$) from the optimum value by a cause of a drop out, etc. As other steps are the same ones as shown in Fig. 7, the explanation thereof is omitted.

The count number is changed at each intermittent drive in the above mentioned embodiments. However, for example, it is possible to change the count number at every other frame (every four tracks). In this case, the frequency of the output signal of the local frequency generator 10 is fixed to one of f2 or f4.

As mentioned above, this invention makes it possible to provide the variable speed reproduction by the intermittent drive in the system using the pilot signals. Further this invention makes it possible to provide the noiseless variable speed reproduction by averaging the tracking error signal at the micro computer, etc.

**Claims**

1. A method of compensating deviation between a rotating magnetic head and one of the tracks on a magnetic tape (1), in which tracks information including pilot signals (f1—4) as a tracking signal is recorded, during an intermittent drive for a noiseless slow motion reproduction in a rotating head helical scan type tape recording/reproduction apparatus, characterized by the following steps:

a step of counting a series of pulses from a frequency generator (17) of a capstan (5) during the intermittent drive in order to detect a timing of stopping the tape feeding, when the count number (FG) thereof becomes a set value (FGN) at least initially corresponding to a regular amount of feeding the tape (1) during the intermittent drive,

a step of producing a tracking error signal ($\Delta E$) from the pilot signals reproduced from the tape within a tape stop state of the intermittent drive, and

a step of correcting said set value in response to said tracking error signal.

2. A method of compensating deviation according to claim 1, characterized in that said tracking error signal is averaged by integrating itself during at least one field period of said tape stop state.

3. A method of compensating deviation according to claim 1, characterized in that said set value is corrected in response to a difference between said tracking error signal of said tape stop state and the tracking error signal of the former tape stop state.

4. An apparatus of compensating deviation between one of rotating heads and one of tracks on a magnetic tape, in which tracks a video signal and pilot signals (f1—4) are recorded, during an intermittent drive for a noiseless slow motion reproduction in a rotating heads helical scan type video tape recorder which includes a cylinder (2) having the rotating heads, a capstan and a capstan motor (5), and means (7) for producing a tracking error signal (ΔE) from the pilot signals reproudced from the magnetic tape (1) by the rotating head (3) during a tape stop state of the intermittent drive, means for counting a series of pulses from a frequency generator (17) of a capstan during a tape feeding state of the intermittent drive, characterized by detecting a timing, when the counting number (FG) thereof becomes a set value (FGN) at least initially corresponding to a regular amount of feeding the magnetic tape during the intermittent drive, means for controlling the stopping of the capstan motor in response to an output signal of said counting and detecting means, and means for correcting said set value for the next tape feeding state in response to said tracking error signal.

5. An apparatus of compensating deviation according to claim 4, characterized in that said counting and detecting means and said correcting means are constructed by a microcomputer (20).

**Patentansprüche** .

1. Verfahren zum Ausgleichen einer Abweichung zwischen einem rotierenden magnetischen Kopf und einer der Spuren auf einem magnetischen Band (1), in welcher Spurinformation aufgezeichnet wird, die Pilotsignale (f1—4) als Spurnachführsignal aufweist, und zwar während eines intermittierenden Antriebs für eine rauschfreie Zeitlupenwiedergabe in einer Aufzeichnungs/Wiedergabevorrichtung mit Schrägspurrotationskopf, gekennzeichnet durch folgende Schritte:

ein Schritt zum Zählen einer Reihe von Pulsen eines Frequenzgenerators (17) eines Capstans (5) während des intermittierenden Antriebs, um den Zeitpunkt des Stoppens der Bandzuführung zu detektieren, wenn die Zählnummer (FG) davon ein gesetzter Wert (FGN) wird, der mindestens am Anfang einem regelmäßigen Betrag der Zuführung des Bands (1) während des intermittierenden Antriebs entspricht,

ein Schritt zum Generieren eines Spurnachführfehlersignals (ΔE) von den Pilotsignalen, welche vom Band während eines Bandstoppzustands des intermittierenden Antriebs wiedergegeben werden, und

ein Schritt zum Korrigieren des gesetzten Werts in Antwort auf das Spurnachführfehlersignal.

2. Verfahren zum Ausgleichen einer Abweichung nach Anspruch 1, dadurch gekennzeichnet, daß das Spurnachführfehlersignal gemittelt wird, indem es während mindestens einer Feldperiode des Bandstoppzustands integriert wird.

3. Verfahren zum Ausgleichen einer Abweichung nach Anspruch 1, dadurch gekennzeichnet, daß der gesetzte Wert in Antwort auf einen Unterschied zwischen dem Spurnachführfehlersignal des Bandstoppzustandes und dem Spurnachführfehlersignal des vorhergehenden Bandstoppzustandes korrigiert wird.

4. Vorrichtung zur Ausgleichung einer Abweichung zwischen einem von Magnetköpfen und einer von Spuren auf einem magnetischen Band, wobei auf den Spuren ein Videosignal und Pilotsignale (f1—4) aufgezeichnet werden, während einer intermittierenden Steuerung für eine rauschfreie Zeitlupenwiedergabe in einem Video-Bandrecorder mit Schrägspur-Rotationsköpfen, der einen Zylinder (2) aufweist, der aufweist:

die Rotationsköfpe, ein Capstan und einen Capstanmotor (5), und eine Einrichtung (7) zum Generieren eines Spurnachführfehlersignals (ΔF) von den Pilotsignalen, welche von magnetischen Band (1) durch den Rotationskopf (3) während eines Bandstoppzustandes des intermittierenden Antriebs wiedergegeben werden, eine Einrichtung zum Zählen einer Reihe von Pulsen von einem Frequenzgenerator (17) eines Capstans während eines Bandzuführungszustands des intermittierenden Antriebs, gekennzeichnet durch das Detektieren eines Zeitpunkts, wenn die Zählnummer (FG) davon ein gesetzter Wert (FGN) wird, welcher mindestens am Anfang einem regelmäßigen Betrag der Zuführung des magnetischen Bandes während des intermittierenden Antriebs entspricht, eine Einrichtung zur Steuerung des Stoppens des Capstanmotors in Antwort auf ein Ausgangssignal der Zähl- und Detektierungseinrichtung, und eine Einrichtung zur Korrektur des gesetzten Wertes für den nächsten Bandzuführungszustand in Antwort auf das Spurnachführfehlersignal.

5. Vorrichtung zur Ausgleichung einer Abweichung nach Anspruch 4, dadurch gekennzeichnet, daß die Zähl- und Detektierungseinrichtung und die Korrektureinrichtung von einem Mikrocomputer (20) gebildet werden.

**Revendications**

1. Procédé pour compenser un écart entre une tête magnétique rotative et l'une des pistes situées sur une bande magnétique (1) et sur lesquelles une information incluant des signaux pilotes (f1—4) et formant signal de suivi est enregistrée, pendant un entraînement intermittent pour l'obtention d'une lecture à déplacement lent et sans bruit, dans un dispositif d'enregistrement/lecture de bande du type à balayage hélicoïdal de la tête rotative, caractérisé par les étapes suivantes:

une étape de comptage d'une série d'impulsions délivrées par un générateur de fréquence (17) d'un cabestan (5) pendant l'entraînement intermittent, en vue de détecter un instant d'arrêt de l'avance de la bande, lorsque le nombre compté (FG) des impulsions atteint une valeur réglée (FGN) correspondant au moins initialement à une distance régulière d'avance de la bande (1) pendant l'entraînement intermittent,

une étape de production d'un signal d'erreur de suivi (ΔE) à partir des signaux pilotes lus à partir de la bande pendant un état d'arrêt de la bande lors de l'entraînement intermittent, et

une étape de correction de ladite valeur réglée en réponse audit signal d'erreur de suivi.

2. Procédé pour compenser un écart selon la revendication 1, caractérisé en ce que le moyenne dudit signal d'erreur de suivi est formée par intégration de cette valeur pendant au moins la période d'une zone dudit état d'arrêt de la bande.

3. Procédé pour compenser un écart selon la revendication 1, caractérisé en ce que ladite valeur réglée est corrigée en réponse à une différence entre ledit signal d'erreur de suivi dudit état d'arrêt de la bande et le signal d'erreur de suivi de l'état antérieur d'arrêt de la bande.

4. Dispositif pour compenser un écart entre l'une des têtes rotatives et l'une des pistes situées sur une bande magnétique et sur lesquelles un signal vidéo et des signaux pilotes (f1—4) sont enregistrés, pendant un entraînement intermittent en vue de l'obtention d'une lecture à déplacement lent et sans bruit dans un enregistreur à bande vidéo du type à balayage hélicoïdal des têtes rotatives, qui comporte un cylindre (2) équipé des têtes rotatives, un cabestan et un moteur (5) d'entraînement de cabestan, et des moyens (7) pour produire un signal d'erreur de suivi (ΔE) à partir des signaux pilotes lus à partir de la bande magnétique (1) par la tête rotative (3) pendant l'état d'arrêt de la bande au cours de l'entraînement intermittent, des moyens pour compter une série d'impulsions délivrées par un générateur de fréquence (17) d'un cabestan pendant un état d'avance de la bande lors de l'entraînement intermittent, caractérisé par la détection d'un instant où le nombre compté (FG) d'impulsions atteint une valeur réglée (FGN) correspondant au moins initialement à une distance régulière d'avance de la bande magnétique pendant l'entraînement intermittent, des moyens pour commander l'arrêt du moteur d'entraînement du cabestan en réponse à un signal de sortie desdits moyens de comptage et de détection, et des moyens pour corriger ladite valeur réglée pour l'état suivant d'avance de la bande en réponse audit signal d'erreur de suivi.

5. Dispositif pour compenser un écart selon la revendication 4, caractérisé en ce que lesdits moyens de comptage et de détection et lesdits moyens de correction sont constitués par un micro-ordinateur (20).

# FIG. 1

# FIG. 2

f1  A  f2  f3 B  f4 f1 A  f2

a    b

# FIG. 3

1st ERROR
(3fH)

0

2nd ERROR
(1fH)

0

ΔE   0

ΔE

t

t1   t2   t3

SW 30

## FIG. 4

## FIG. 7

## FIG. 5(I)

## FIG. 5(II)

## FIG. 5(III)

ΔE
0

CM RUN

REVERSE

FGN 1

0   t4 t5

FGN 2

0   t4 t5

## FIG. 6

```
              ( START )
                  │
                  ▼
          ◇ MODE  DET. ◇────── B ──────┐
         A │                           │
          ▼                            ▼
    │ LOCAL ← f2 │              │ LOCAL ← f4 │
          │                            │
          ▼                            │
    ◇ SW30  UP ◇──── NO ──────────────┘
        DOWN │
       YES   │
          ▼
    │ t2 - t1  DELAY │
          │
          ▼
    │ △E  DET. │
          │
          ▼
      ◇  △E  ◇──────── P ───────┐
          │ N                    │
          ▼                      ▼
  │ FGN ← FGo +△FG │    │ FGN ← FGo -△FG │
          │                      │
          ◄──────────────────────┘
          ▼
  │ CMRUN ← "H" │
          │
          ▼
  │ FG COUNT │
          │
          ▼
   ◇ FG > FGN ◇──── NO ──┐
       YES │             │
          ▼              │
  │ REVERSE ← "H" │      │
          │              │
          ▼              │
  │ t5 - t4  DELAY │     │
          │              │
          ▼              │
  │ CMRUN ← "L"          │
    REVERSE ← "L" │      │
          │              │
          ▼              │
  │ ts  DELAY │          │
          │              │
          └──────────────┘
```

*FIG. 8*

```
                    ( START )
                        │
                ┌───────────────┐
                │  ΔEn-1 ← 0    │
                └───────────────┘
                        │
                ┌───────────────┐
                │  FGN ← FGo    │
                └───────────────┘
                        │
                       ╱╲                    B
                  ╱  MODE DET  ╲──────────────────────┐
                   ╲          ╱                        │
                    ╲╱                                 │
              A      │                                 │
         ┌───────────────┐              ┌───────────────┐
         │  LOCAL ← f2   │              │  LOCAL ← f4   │
         └───────────────┘              └───────────────┘
                  │                              │
                 ╱╲           NO                 │
            ╱  SW30 UP  ╲──────────────────────┘
             ╲  DOWN    ╱
              ╲╱
          YES  │
         ┌───────────────┐
         │ t2 - t1 DELAY │
         └───────────────┘
                  │
         ┌───────────────┐
         │   ΔEn  DET    │
         └───────────────┘
                  │
                 ╱╲              P
            ╱   ΔEn   ╲──────────────────────────┐
             ╲       ╱                            │
              ╲╱                                  │
          N   │                                   │
           ╱╲           P              ╱╲            P
      ╱ ΔEn-ΔEn-1 ╲──────────┐    ╱ ΔEn-ΔEn-1 ╲──────────┐
       ╲          ╱           │     ╲          ╱          │
        ╲╱                    │      ╲╱                   │
      N   │                   │    N  │            ┌───────────────┐
  ┌───────────────┐           │       │            │  FGN ← FGN-1  │
  │  FGN ← FGN+1  │           │       │            └───────────────┘
  └───────────────┘           │       │                   │
          │                   └───────┴───────────────────┘
                 ╱╲          NO
            ╱  FGo-4   ╲───────────────────────┐
           ╱ <FGN<FGo   ╲                       │
            ╲    +4     ╱                        │
             ╲╱                                  │
          YES │                         ┌───────────────┐
              │                         │  FGN ← FGo    │         ┌───────────┐
         ┌───────────────┐              └───────────────┘         │ ts DELAY  │
         │  CMRUN ← "H"  │                      │                 └───────────┘
         └───────────────┘                                              │
              │                                                         │
         ┌───────────────┐                                             │
         │   FG COUNT    │                                             │
         └───────────────┘                                             │
              │                                                        │
             ╱╲          NO        ┌───────────────┐                   │
        ╱ FG>FGN ╲──────────────── │ REVERSE ← "H" │                   │
         ╲       ╱                 └───────────────┘                   │
          ╲╱                              │                            │
       YES │                       ┌───────────────┐                   │
           │                       │ t5 - t4 DELAY │                   │
           │                       └───────────────┘                   │
           │                              │                            │
           │                       ┌───────────────┐                   │
           │                       │  CMRUN ← "L"  │                   │
           │                       │  REVERSE ← "L"│                   │
           │                       └───────────────┘                   │
```